# EUROPEAN PATENT SPECIFICATION

(11) **EP 1 880 536 B1**
(45) Date of publication and mention of the grant of the patent: **13.01.2010**
(21) Application number: 06733485.4
(22) Date of filing: 10.05.2006
(51) Int. Cl.: H04M 3/56, H04N 7/15

(54) **SYSTEM AND METHOD FOR CONFERENCE CALLS**
SYSTEM UND VERFAHREN FÜR KONFERENZVERBINDUNGEN
SYSTEME ET PROCEDE D'APPELS DE CONFERENCE

(30) Priority: 13.05.2005 SE 0501094
(43) Date of publication of application: 23.01.2008
(73) Proprietor: TeliaSonera AB, S-106 63 Stockholm (SE)
(72) Inventor: NYCKELGÅRD, Sören, S-448 34 Floda (SE)
(74) Representative: Bengtsson, Peggy Katrin
(86) International application number: PCT/SE2006/050115
(87) International publication number: WO 2006/121405

(56) References cited:
- EP-A1- 1 164 774
- US-A1- 2002 071 540
- US-A1- 2002 136 382
- US-B1- 6 275 575

## Description

The present invention relates to a telephone conference system and particularly such a telephone conference system which can provide value added functions to participants in a telephone conference.

### PRIOR ART

When using many of the telephone conference services of today the participants normally have to indicate an access code before they are connected anonymously to a conference service. Today's conference services consequently in most cases have no knowledge about which users that are participating in the conference.

However there exist conference systems which identify the conference participants. In the American patent document US 2004/0037406 A1 a method and a system for exchange of messages between the participants in a telephone conference are shown. The messages contain information about which participants leave the telephone conference and which are new. A memory is updated in order to all the time contain information about those participants who for the time being participate in the telephone conference.

A disadvantage with existing systems and the system according to the American patent document US 2004/0037406 A1 is that they cannot handle the case when a plurality of conference participants are in one and the same conference room and by that share one of the connections/set ups to the telephone conference. In this case it is one of the conference participants that establishes/sets up the connection to the telephone conference and by that registers himself/herself as participant. Other conference participants present in the conference room remain anonymous to the system.

The American patent document 2002/136 382 A1 discloses a teleconference facilitation system and method that may allow a user to pre-register a group or "team". When the user contacts a server via, for example, a pre-arranged telephone number, a central server attempts to initiate a teleconference among the user and the team members.

A disadvantage with the system of the American patent document 2002/136 382 A1 is that if user is contacting the telephone conference system with an unrecognized identifier the user may be directed to an account initialization directory, a website, or an operator. The unregistered user may be given an error message when contacting the teleconference system.

### SUMMARY OF THE INVENTION

The present invention relates to a telephone conference system, and particularly such a telephone conference system which can provide value added functions to participants in a telephone conference.

The present invention overcomes the above mentioned disadvantage among others by a telephone conference system and a procedure in a telephone conference system according to the independent patent claims.

By the system and the procedure according to the invention, all conference participants, that is, also those who do not themselves establish a media connection to the conference service but only utilize a connection set up by somebody else, can register their participation in the telephone conference. By that value added functions can be offered where information about all participants are of importance.

According to one embodiment, the telephone conference system according to the invention includes a number of participants with conference equipment, a conference service arrangement for handling of telephone conferences. The conference service arrangement includes a conference device with a first server function for handling of registration of participants who are connected via their for each participant specific conference equipment. The telephone conference system further includes a storing device which, from a communication point of view, is connected to said conference device, at which said storing device is arranged to store information about the participants who are engaged in a telephone conference in progress. The telephone conference system further includes a registration device with a second server function arranged for registration of a not set up participant, who co-utilizes any of said conference equipment.

The telephone conference system according to the invention is so arranged that the service registers which individuals who, for the time being, participate in a conference in progress. Examples of a value added functions which can be offered with a system according to the invention are:
- The function that the conference participants can see a list over which other participants who for the time being are participating in the telephone conference;
- The function that the conference participants are given possibility to see the personal electronic visiting cards and photos of the other conference participants; and
- The function that the conference participants are given possibility to, during the telephone conference, send e-mail or direct messages to other conference participants by, for instance, a single click on a name in the list over conference participants.

These functions/services can be based on the same technology that are utilized in existing "messenger services", such as ICQ and MSN messenger, and therefore these are not described in detail.

### BRIEF DESCRIPTION OF THE DRAWINGS

The invention will be described in more detail in the following with reference to enclosed drawings, in which:
Fig. 1 shows a first embodiment of the telephone conference system according to the invention;
Fig. 2 shows a second embodiment of the telephone conference system according to the invention;
Fig. 3 shows a third embodiment of the telephone conference system according to the invention;
Fig. 4 shows a fourth embodiment of the telephone conference system according to the invention; and
Fig. 5 shows a fifth embodiment of the telephone conference system according to the invention;

### DESCRIPTION OF PREFERRED EMBODIMENTS

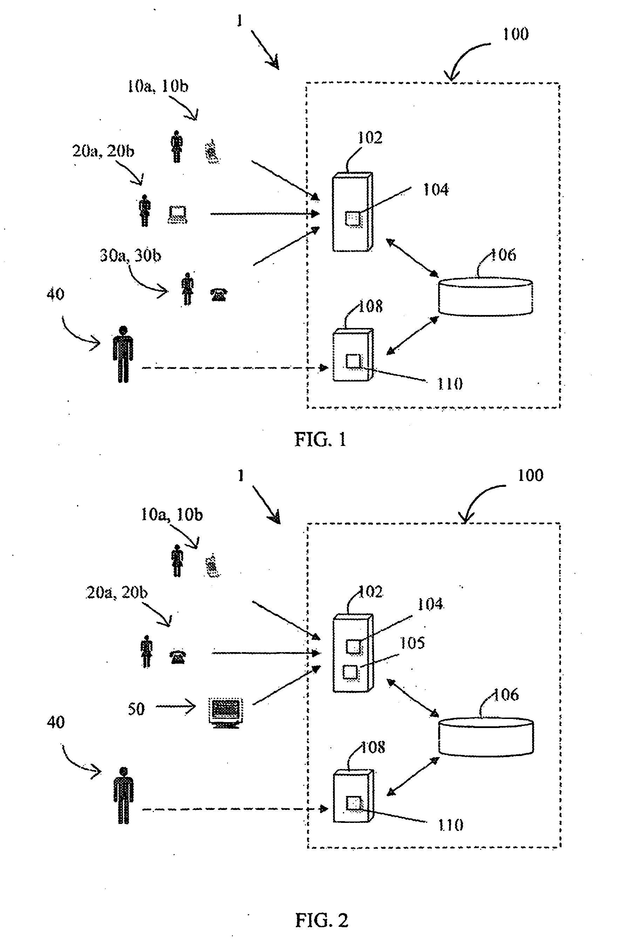

The present invention now will be described in more details with references to the drawings. In the Figures 1- 5, the same or similar parts or components are given the same reference designations.

In the description, the expression "set up participant" will be used for a participant in a telephone conference who has himself/herself established/set up a media connection, and the expression "not set up participant" will be used for a participant who has nor himself/herself established/set up a media connection but utilizes a media connection/set up which a set up participant has made.

The telephone conference system 1 according to the invention includes a number of participants 10a, 20a, 30a, 40 who participate in a telephone conference. For example, a first participant 10a can participate via a mobile telephone 10b, a second participant 20a via a computer 20b, and a third participant 30a via a stationary telephone 30b. A fourth participant 40 can participate as listener at any of the other participants 10a, 20a, 30a.

The telephone conference system 1 further includes a conference service arrangement 100 for handling of telephone conferences. The conference service arrangement 100 includes a conference device 102 with a first server function 104 for handling of registration of participants 10a, 20a, 30a. A participant 10a, 20a, 30a registers himself/herself by his/her conference equipment 10b, 20b, 30b, which, from a communication point of view, is connected to the conference device 102. The conference device 102 is, from a communication point of view, connected to a storing device 106 induced in the conference service arrangement 100. The storing device 106 is arranged to store information about the connected/ set up participants 10a, 20a, 30a who, for the time being, participate in a telephone conference in progress.

The conference device 102 consequently includes mechanisms, that is, components and functions, to register connected/set up participants and to store information about these participants at the storing place 106 of the conference service.

Any specific protocols by which a participant communicates with the conference device 102, that is, by which a participant for instance can log in or register himself/herself, are not described here in detail, because such functions can be implemented by a lot of different, well standardized or quite proprietary, protocols. Some examples of mechanisms by the help of which log in/ registration can be made, however, can be emphasized, for instance via a home page on the Internet, via an electronic message, such as e-mail, SMS (Short. Message Service), MMS (Multimedia Messaging Service), direct message, etc. Log- in/registration also can be made via a terminal client application which communicates with the registration function of a conference service arrangement, or conference device.

Figure 1 shows a first embodiment of the system 1 according to the invention in which the conference service arrangement 100 incudes a registration device 108 with a second server arrangement 110 for registration of a not set up participant. 40.

The conference service arrangement 100 includes functions which make possible that also conference participants who do not themselves establish/set up a connection to the conference service can register their existence/ participation at the conference service. This registration or log-in can, for instance, be made via SMS (Short Message Service), electronic mail, telephone call, web page or via specific client application in the conference participant's conference equipment. This type of registration later can be deleted automatically when all connections/set ups to the conference service have been disconnected.

In Figure 1 registration device 108 is included in the conference service arrangement 100, but it should be understood that the registration device can be arranged in any other suitable way. The registration device, for instance, can be integrated with the registration mechanism of the conference device for connected/set up participants.

The registration device 108 is, from a communication point of view, connected to the storing device 106, at which information about not set up participants can be stored at the storing place 106 of the conference service.

Figure 2 shows a second embodiment of the system 1 according to the invention, in which the conference service arrangement 100 further includes a conference device 102 with a third server function 105 for registration of a room by one in the room existing conference equipment 50, which conference equipment is arranged to communicate with said third server function 105.

Consequently also participants who do not set up a media connection to the conference service yet can register their presence/attendance. A connection can be set up to the conference service without the connection being directly associated to a specific user. One case of application is, for instance, when one wants to connect conference equipment 50, such as A/V-equipment, in an assembly room or in a conference room to the telephone conference service 100 and then let the participants in the room register themselves individually at the conference service. In such an embodiment, the conference services which register which persons that participate in the conference can be equipped with a function which also makes establishing of connection/set up from conference equipment 50 which is net associated to a specific conference participant possible. The conference equipment 50 is instead associated to a specific assembly room/conference room.

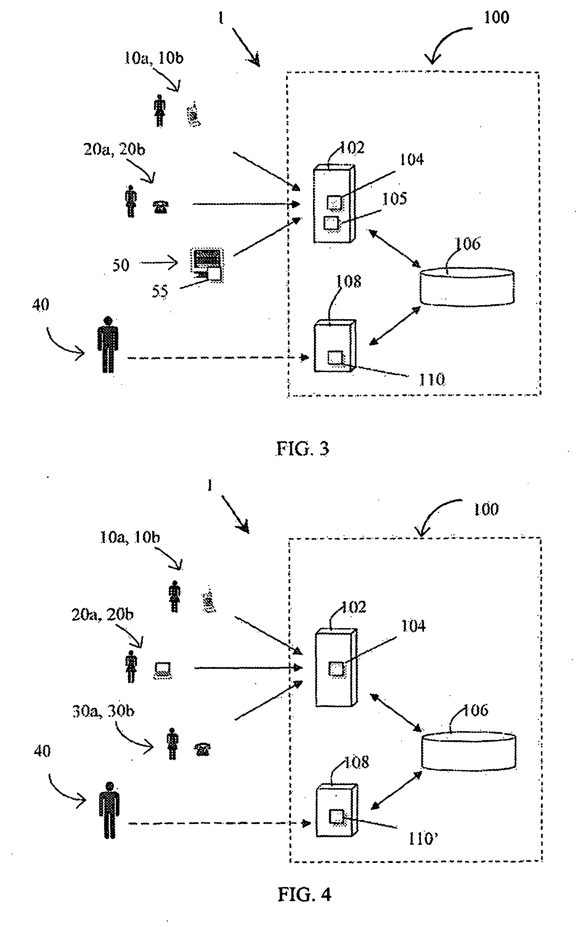

Figure 3 shows a third embodiment of the system 1 according to the invention, including a terminal based client application 55 in said telephone conference equipment 50. The telephone conference equipment 50 is, from a communication point of view, connected to the third server function 105, which is included in the conference device 102. The client application 55 is arranged to establish/set up a local -specific connection/set up to a telephone conference.

The terminal based client application consequently is arranged to establish a local -specific, not individual- specific, connection/set up to a telephone conference service which has been designed/created to register all conference participants as has been described above. This shall be distinguished from the client application which sets up an individual-specific connection/set up to the conference service.

Figure 4 shows a fourth embodiment of the system according to the invention. This embodiment includes a modified second server function 110' which is arranged to make possible a reference from a not set up participant 40 to a set up participant 10a, 20a, 30a, or to conference equipment 50 in a connected/set up assembly/conference room. Further, said storing device 106 includes information about said references between not set up participants 40 and set up participants 10a, 20a, 30a or assembly rooms.

There is a value in having the possibility to supply information about, which conference participants that are in the same place, so the invention also includes to complement the conference service, with a function which provides conference participants who do not themselves establish/set up connection to the conference service but only register their presence/attendance, for instance via SMS, with possibility to refer either to the assembly room or the conference room where he or she is, and from which the connection/set up to the service has been created, or to the conference participant 10a, 20a, 30a who allow other conference participants 40 in the room to co- utilize his/her terminal 10b, 20b, 30b. Co-utilization can, for instance, be realized by connection of a data projector and/or an external sound system to the terminal 10b, 20b, 30b.

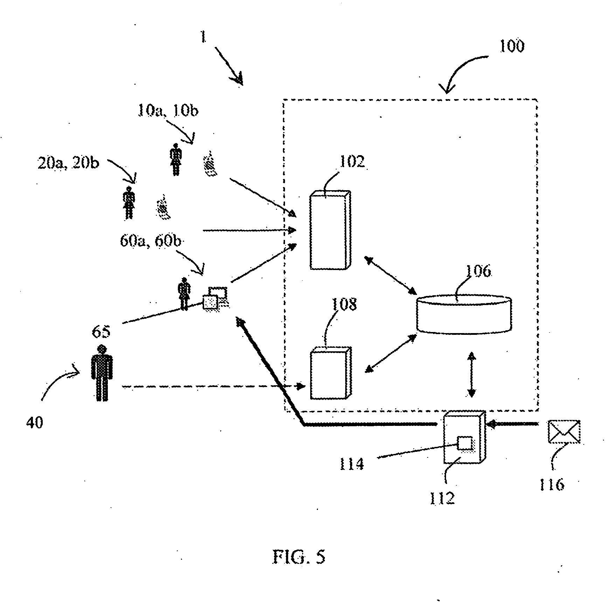

Figure 5 shows a fifth embodiment of the system 1 according to the invention, including a transit device 112 for transit of a direct message 116 to a conference participant 10a, 20a, 30a, 40. Said transit device 112 is, from a communication point of view, connected to said storing device 106 and to said conference participant or conference equipment.

Said transit device 112 can include a blocking functions 114 for blocking of personal direct messages to co-utilized conference equipment 60b. Alternatively co- utilized conference equipment 60b can include a blocking function 65 for blocking of personal direct, messages to said co-utilized conference equipment 60b.

One should notice the difference between media directed to all conference participants, which, for instance, can be presented via A/V-equipment in a conference room, and media directed to a specific/single user, which in all situations should be transmitted direct to the user's private terminal. When a conference participant allows other persons to co-utilize his/her conference equipment, there is a risk that other conference participants will be acquainted with information only intended for the owner. The present invention therefore includes a blocking function as described above, which can suppress presentation of media directed to an individual user at those occasions when other conference participants co-utilize his/her conference equipment. The conference service can decide if a conference equipment is co-utilized either by other conference participants having referred to this conference equipment, for instance at registration at the conference service, or by the owner of the conference equipment himself/herself indicating that the equipment is co-utilized.

The suppression either can be made by a function in the receiving, co-utilized conference equipment, or by a function in a message switching service which co-operates with the conference service.

Said conference equipment 50 and said co-utilizing conference equipment 60b can, for instance, consist of a computer terminal.

In the description above, the invention has been described with reference to telephone conference, and it should be understood that all types of media, for instance audio, video, text and application sharing, which is electronically transmitted between conference participants which are not in the same geographical place, are induced in the expression telephone conference.

The invention has above been described by means of exemplified embodiments. It should, however, be understood that, the invention can be modified, and embodiments can be combined without failing out of the scope of the invention which is limited only by enclosed patent claims.

## Claims

1. Conference system (1) including a number of participants (10a, 20a, 30a) with conference equipment (10b, 20b, 30b, 50), and a conference service arrangement (100) for handling of conferences, said conference service arrangement (100) including a conference device (102) with a first server function (104) for handling of registration for participants (10a, 20a, 30a) connected via conference equipment (10b, 20b, 30b), said conference system (1) further including a storing device (106) which, from a communication point of view, is connected to said conference device (102), at which said storing device (106) is arranged to store information about those participants (10a, 20a, 30a) who participate in a conference in progress, **characterized in that** a registration device (108) including a second server function (110, 110') is arranged for registration of a not set up participant (40), who co-utilizes any of said conference equipment (10b, 20b, 30b).

2. Conference system (1) as claimed in claim 1, **characterized in that** said server function (110, 110') is so arranged that said not set up participant (40) can register themselves as a not set up conference participant via SMS, e-mail, telephone call, web page or via a specific client application in a set up participant's (10a, 20a, 30a) conference equipment (10b, 20b, 30b).

3. Conference system (1) as claimed in claim 1 or 2, **characterized in** a third server function (105) arranged for registration of a room as conference participant via conference equipment (50) arranged in said room.

4. Conference system (1) as claimed in claim 3, **characterized in that** a terminal based client application in said conference equipment (50) is arranged to establish a local-specific connection to said conference arrangement (100).

5. Conference system (1) as claimed in any of the previous claims, **characterized in that** said second server function (110') is arranged to make possible a reference from a not set up participant (40) to set up participant (10a, 20a, 30a), or to a set up room, and **in that** said storing device (106) is arranged to hold information about said references between not set up participants (40) and set up participants (10a, 20a, 30a) or rooms.

6. Conference system (1) as claimed in any of the previous claims, **characterized in** a transit device (112) for transit of a direct message (116) to a conference participant (10a, 20a, 30a, 40), at which said transit device (112), from a communication point of view, is connected to said storing device (106).

7. Conference system (1) as claimed in claim 6, **characterized in that** said transit device (112) includes a blocking function (114) arranged to block personal direct messages to co-utilized conference equipment (60b).

8. Conference system (1) as claimed in claim 6, **characterized in that** co-utilized conference equipment (60b) incudes a blocking function (65) for blocking of personal direct messages to said co-utilized conference equipment (60b).

9. Procedure in a conference system (1) including a number of participants (10a, 20a, 30a) with conference equipment (10b, 20b, 30b, 50), a conference service arrangement (100) for handling of conferences, said conference service arrangement (100) including a conference device (102) with a first server function (104) for handling of registration of participants (10a, 20a, 30a) connected via conference equipment (10b, 20b, 30b), said conference system (1) further including a storing device (106) from a communication point of view connected to said conference device (102), at which said storing device (106) is arranged to store information about the participants (10a, 20a, 30a) who participate in a conference in progress, said procedure including the step that a not set up participant (40) registers himself as conference participant, who co-utilizes any of said conference equipment (10b, 20b, 30b), by means of a second server function (110, 110') included in a registration device (108).

10. Procedure as claimed in claim 9, further including the step that said not set up participant (40) can register himself as a not set up conference participant via SMS, e-mail, telephone call, web page or via a specific client application in a set up participant's (10a, 20a, 30a) conference equipment (10b, 20b, 30b).

11. Procedure as claimed in claim 9 or 10, further including the step that a room is registered as conference participant via conference equipment (50) arranged in said room.

12. Procedure as claimed in claim 11, further including the step that a terminal based client application (55) in said conference equipment (50) establishes a local-specific connection to said conference arrangement (100).

13. Procedure as claimed in any of the claims 9-12, further including the step that said second server function (110') makes possible a reference from a not set up participant (40) to set up participant (10a, 20a, 30a), or to a set up room, and in that said storing device (106) holds information about said references between not set up participants (40) and set up participants (10a, 20a, 30a), or rooms.

14. Procedure as claimed in any of the claims 9-13, further including the step to transit a direct message (116) to a conference participant (10a, 20a, 30a, 40) by means of a transit device (112).

15. Procedure as claimed in claim 14, further including the step that a blocking function (114) included in said transit device (112) blocks personal direct messages to co-utilized conference equipment (60b).

16. Procedure as claimed in claim 14, further including the step that a blocking function (65) included in co-utilized conference equipment (60b) blocks personal direct messages to said co-utilized conference equipment (60b).

## Patentansprüche

1. Konferenzsystem (1) mit einer Vielzahl von Teilnehmern (10a, 20a, 30a) mit einer Konferenzanlage (10b, 20b, 30b, 50) und einer Konferenzdienstanordnung (100) zum Handhaben von Konferenzen, wobei die Konferenzdienstanordnung (100) eine Konferenzvorrichtung (102) enthält mit einer ersten Serverfunktion (104) zum Handhaben einer Registrierung für Teilnehmer (10a, 20a, 30a), die über die Konferenzanlage (10b, 20b, 30b) verbunden sind, wobei das Konferenzsystem (1) ferner eine Speicherungsvorrichtung (106) enthält, die aus einer Kommunikationspunktsicht mit der Konferenzvorrichtung (102) verbunden ist, bei der die Speicherungsvorrichtung (106) angeordnet ist zum Speichern einer Information über diese Teilnehmer (10a, 20a, 30a), die an einer stattfindenden Konferenz teilnehmen, **dadurch gekennzeichnet, dass** eine Registrierungsvorrichtung (108) mit einer zweiten Serverfunktion (110, 110') angeordnet ist zum Registrieren eines nicht-eingerichteten Teilnehmers (40), der Irgendetwas der Konferenzanlage (10b, 20b, 30b) mitbenutzt.

2. Konferenzsystem (1) wie in Anspruch 1 beansprucht, **dadurch gekennzeichnet, dass** die Serverfunktion (110, 110') so angeordnet ist, dass der nicht-eingerichtete Teilnehmer (40) sich selbst als ein nicht-eingerichteter Konferenzteilnehmer mittels SMS, e-Mail, Telefonanruf, Web-Seite oder mittels einer spezifischen Client-Anwendung in einer Konferenzanlage (10b, 20b, 30b) eines eingerichteten Teilnehmers (10a, 20a, 30a) registrieren kann.

3. Konferenzsystem (1) wie im Anspruch 1 oder 2 beansprucht, **gekennzeichnet durch** eine dritte Serverfunktion (105), die angeordnet ist zur Registrierung eines Raums als Konferenzteilnehmer über eine in dem Raum angeordnete Konferenzanlage (50).

4. Konferenzsystem (1) wie im Anspruch 3 beansprucht, **dadurch gekennzeichnet, dass** eine Endgerät-basierte Client-Anwendung in der Konferenzanlage (50) angeordnet ist zum Errichten einer lokalspezifischen Verbindung mit der Konferenzanordnung (100).

5. Konferenzsystem (1) wie in einem der vorhergehenden Ansprüche beansprucht, **dadurch gekennzeichnet, dass** die zweite Serverfunktion (110') angeordnet ist, eine Referenz von einem nicht-eingerichteten Teilnehmer (40) zu einem eingerichteten Teilnehmer (10a, 20a, 30a) oder zu einem eingerichteten Raum möglich zu machen, und dass die Speicherungsvorrichtung (106) angeordnet ist zum Halten einer Information über die Referenzen zwischen nicht-eingerichteten Teilnehmern (40) und eingerichteten Teilnehmern (10a, 20a, 30a) oder Räumen.

6. Konferenzsystem (1) wie in einem der vorhergehenden Ansprüche beansprucht, **gekennzeichnet durch** eine Durchgangsvorrichtung (112) für einen Durchgang einer direkten Nachricht (116) zu einem Konferenzteilnehmer (10a, 20a, 30a, 40), bei dem die Durchgangsvorrichtung (112) aus einer Kommunikationspunktsicht mit der Speicherungsvorrichtung (106) verbunden ist.

7. Konferenzsystem (1) wie im Anspruch 6 beansprucht, **dadurch gekennzeichnet, dass** die Durchgangsvorrichtung (112) eine Blockierfunktion (114) enthält, die angeordnet ist zum Blockieren persönlicher direkter Nachrichten an eine mitbenutzte Konferenzanlage (60b).

8. Konferenzsystem (1) wie im Anspruch 6 beansprucht, **dadurch gekennzeichnet, dass** die mitbenutzte Konferenzanlage (60b) eine Blockierfunktion (65) zum Blockieren persönlicher direkter Nachrichten an die mitbenutzte Konferenzanlage (60b) enthält.

9. Prozedur in einem Konferenzsystem (1) mit einer Anzahl von Teilnehmern (10a, 20a, 30a) mit einer Konferenzanlage (10b, 20b, 30b, 50), einer Konferenzdienstanordnung (100) zum Handhaben von Konferenzen, wobei die Konferenzdienstanordnung (100) eine Konferenzvorrichtung (102) mit einer ersten Serverfunktion (104) zum Handhaben einer Registrierung von Teilnehmern (10a, 20a, 30a) enthält, die über die Konferenzanlage (10b, 20b, 30b) verbunden sind, wobei das Konferenzsystem (1) ferner eine Speicherungsvorrichtung (106) aus einer Kommunikationspunktsicht enthält, die mit der Konferenzvorrichtung (102) verbunden ist, bei der die Speicherungsvorrichtung (106) angeordnet ist zum Speichern einer Information über die Teilnehmer (10a, 20a, 30a), die an einer stattfindenden Konferenz teilnehmen, wobei die Prozedur den Schritt enthält, dass ein nicht-eingerichteter Teilnehmer (40) sich selbst als Konferenzteilnehmer registriert, der Irgendetwas der Konferenzanlage (10b, 20b, 30b) mitbenutzt, mittels einer zweiten Serverfunktion (110, 110'), die in einer Registrierungsvorrichtung (108) enthalten ist.

10. Prozedur wie im Anspruch 9 beansprucht, mit ferner dem Schritt, dass der nicht-eingerichtete Teilnehmer (40) sich selbst als ein nicht-eingerichteter Konferenzteilnehmer mittels SMS, e-Mail, Telefonanruf, Web-Seite oder mittels einer spezifischen Client-Anwendung in einer Konferenzanlage (10b, 20b, 30b) eines eingerichteten Teilnehmers (10a, 20a, 30a) registrieren kann.

11. Prozedur wie im Anspruch 9 oder 10 beansprucht, mit ferner dem Schritt, dass ein Raum als Konferenzteilnehmer über eine in dem Raum angeordnete Konferenzanlage (50) registriert wird.

12. Prozedur wie im Anspruch 11 beansprucht, mit ferner dem Schritt, dass eine Endgerät-basierte Client-Anwendung (55) in der Konferenzanlage (50) eine lokalspezifische Verbindung mit der Konferenzanordnung (100) errichtet.

13. Prozedur wie in einem der Ansprüche 9 bis 12 beansprucht, mit ferner dem Schritt, dass die zweite Serverfunktion (110') eine Referenz von einem nicht-eingerichteten Teilnehmer (40) zu einem eingerichteten Teilnehmer (10a, 20a, 30a) oder zu einem eingerichteten Raum möglich macht, und dass die Speicherungsvorrichtung (106) eine Information über die Referenzen zwischen nicht-eingerichteten Teilnehmern (40) und eingerichteten Teilnehmern (10a, 20a, 30a) oder Räumen speichert.

14. Prozedur wie in einem der Ansprüche 9 bis 13 beansprucht, mit ferner dem Schritt eines Durchgangs einer direkten Nachricht (116) an einen Konferenzteilnehmer (10a, 20a, 30a, 40) mittels einer Durchgangsvorrichtung (112).

15. Prozedur wie im Anspruch 14 beansprucht, mit ferner dem Schritt, dass eine in der Durchgangsvorrichtung (112) enthaltene Blockierfunktion (114) persönliche direkte Nachrichten an eine mitbenutzte Konferenzanlage (60b) blockiert.

16. Prozedur wie im Anspruch 14 beansprucht, mit ferner dem Schritt, dass eine in der mitbenutzten Konferenzanlage (60b) enthaltene Blockierfunktion (65) persönliche direkte Nachrichten an die mitbenutzte Konferenzanlage (60b) blockiert.

## Revendications

1. Système de conférence (1) comprenant un certain nombre de participants (10a, 20a, 30a) qui possèdent un équipement de conférence (10b, 20b, 30b, 50), et un agencement de service de conférence (100) destiné à gérer des conférences, ledit agencement de service de conférence (100) comprenant un dispositif de conférence (102) avec une première fonction de serveur (104) destinée à gérer un enregistrement des participants (10a, 20a, 30a) connectés par l'intermédiaire d'un équipement de conférence (10b, 20b, 30b), ledit système de conférence (1) comprenant en outre un dispositif de stockage (106) qui, d'un point de vue de la communication, est connecté audit dispositif de conférence (102), où ledit dispositif de stockage (106) est agencé de manière à stocker des informations qui concernent les participants (10a, 20a, 30a) qui participent à une conférence en cours, **caractérisé en ce qu'**un dispositif d'enregistrement (108) comprenant une deuxième fonction de serveur (110, 110') agencée pour un enregistrement d'un participant non connecté (40), qui utilise conjointement n'importe lequel desdits équipements de conférence (10b, 20b, 30b).

2. Système de conférence (1) selon la revendication 1, **caractérisé en ce que** ladite fonction de serveur (110, 110') est agencée de telle sorte que ledit participant non connecté (40) peut s'enregistrer en tant que participant non connecté à une conférence, par l'intermédiaire d'un SMS, d'un courrier électronique, d'un appel téléphonique, d'une page web ou par l'intermédiaire d'une application client spécifique dans un équipement de conférence (10b, 20b, 30b) d'un participant connecté (10a, 20a, 30a).

3. Système de conférence (1) selon la revendication 1 ou la revendication 2, **caractérisé en ce qu'**une troisième fonction de serveur (105) agencée pour un enregistrement d'une salle comme participant à une conférence par l'intermédiaire d'un équipement de conférence (50) disposé dans ladite salle.

4. Système de conférence (1) selon la revendication 3, **caractérisé en ce qu'**une application client basée sur un terminal dans ledit l'équipement de conférence (50) est agencée de manière à établir une connexion spécifique - locale avec ledit agencement de conférence (100).

5. Système de conférence (1) selon l'une quelconque des revendications précédentes, **caractérisé en ce que** ladite deuxième fonction de serveur (110') est agencée de manière à rendre possible une référence à partir d'un participant non connecté (40) vers un participant connecté (10a, 20a, 30a), ou vers une salle connectée, et **en ce que** ledit dispositif de stockage (106) est agencé de manière à contenir des informations qui concernent lesdites références des participants non connectés (40) et des participants (10a, 20a, 30a) ou des salles connectés.

6. Système de conférence (1) selon l'une quelconque des revendications précédentes, **caractérisé en ce qu'**un dispositif de transit (112) destiné à faire transiter un message direct (116) vers un participant à une conférence (10a, 20a, 30a, 40), où ledit dispositif de transit (112), d'un point de vue de la communication, est connecté audit dispositif de stockage (106).

7. Système de conférence (1) selon la revendication 6, **caractérisé en ce que** ledit dispositif de transit (112) comprend une fonction de blocage (114) agencée de manière à bloquer des messages directs personnels vers l'équipement de conférence (60b) qui est utilisé conjointement.

8. Système de conférence (1) selon la revendication 6, **caractérisé en ce que** l'équipement de conférence (60b) qui est utilisé conjointement comprend une fonction de blocage (65) destinée à bloquer des messages directs personnels vers ledit équipement de conférence (60b) qui est utilisé conjointement.

9. Procédé dans un système de conférence (1) comprenant un certain nombre de participants (10a, 20a, 30a) qui possèdent un équipement de conférence (10b, 20b, 30b, 50), un agencement de service de conférence (100) destiné à gérer des conférences, ledit agencement de service de conférence (100) comprenant un dispositif de conférence (102) avec une première fonction de serveur (104) destinée à gérer un enregistrement des participants (10a, 20a, 30a) connectés par l'intermédiaire d'un équipement de conférence (10b, 20b, 30b), ledit système de conférence (1) comprenant en outre un dispositif de stockage (106) qui, d'un point de vue de la communication, est connecté audit dispositif de conférence (102), où ledit dispositif de stockage (106) est agencé de manière à stocker des informations qui concernent les participants (10a, 20a, 30a) qui participent à une conférence en cours, ledit procédé comprenant l'étape selon laquelle un participant non connecté (40) s'enregistre lui-même en tant que participant à une conférence, qui utilise conjointement n'importe lequel desdits équipements de conférence (10b, 20b, 30b), au moyen d'une deuxième fonction de serveur (110, 110') incluse dans le dispositif d'enregistrement (108).

10. Procédé selon la revendication 9, comprenant en outre l'étape selon laquelle ledit participant non connecté (40) peut s'enregistrer en tant que participant non connecté à une conférence, par l'intermédiaire d'un SMS, d'un courrier électronique, d'un appel téléphonique, d'une page web ou par l'intermédiaire d'une application client spécifique dans un équipement de conférence (10b, 20b, 30b) d'un participant connecté (10a, 20a, 30a).

11. Procédé selon la revendication 9 ou la revendication 10, comprenant en outre l'étape selon laquelle une salle est enregistrée comme participant à une conférence par l'intermédiaire d'un équipement de conférence (50) disposé dans ladite salle.

12. Procédé selon la revendication 11, comprenant en outre l'étape selon laquelle une application client basée sur un terminal (55) dans ledit équipement de conférence (50) établit une connexion spécifique - locale avec ledit agencement de conférence (100).

13. Procédé selon l'une quelconque des revendications 9 à 12, comprenant en outre l'étape selon laquelle ladite deuxième fonction de serveur (110') rend possible une référence à partir d'un participant non connecté (40) vers un participant connecté (10a, 20a, 30a), ou vers une pièce connectée, et en ce que ledit dispositif de stockage (106) contient des informations qui concernent lesdites références des participants non connectés (40) et des participants (10a, 20a, 30a) ou des salles connectés.

14. Procédé selon l'une quelconque des revendications 9 à 13, comprenant en outre l'étape consistant à faire transiter un message direct (116) vers un participant à une conférence (10a, 20a, 30a, 40) à l'aide d'un dispositif de transit (112).

15. Procédé selon la revendication 14, comprenant en outre l'étape selon laquelle une fonction de blocage (114) incluse dans ledit dispositif de transit (112), bloque des messages directs personnels vers l'équipement de conférence (60b) qui est utilisé conjointement.

16. Procédé selon la revendication 14, comprenant en outre l'étape selon laquelle une fonction de blocage (65) incluse dans l'équipement de conférence (60b) qui est utilisé conjointement, bloque des messages directs personnels vers ledit équipement de conférence (60b) qui est utilisé conjointement.
